# EUROPÄISCHE PATENTSCHRIFT

(11) **EP 2 684 742 B1**
(45) Veröffentlichungstag und Bekanntmachung des Hinweises auf die Patenterteilung: **06.04.2016**
(21) Anmeldenummer: 13003423.4
(22) Anmeldetag: 08.07.2013
(51) Int. Cl.: B60P 1/44

(54) **Hubladebühne**
Cantilever lift
Plateforme de chargement par levage

(30) Priorität: 09.07.2012 DE 102012013479
(43) Veröffentlichungstag der Anmeldung: 15.01.2014
(73) Patentinhaber: MBB Palfinger GmbH, 27777 Ganderkesee (DE)
(72) Erfinder: Bley, Hubert, 49681 Garrel (DE); Popken, Uwe, 26209 Hatten (DE)
(74) Vertreter: Möller, Friedrich

(56) Entgegenhaltungen:
- DE-U1- 20 318 124

## Beschreibung

Die Erfindung betrifft eine Hubladebühne gemäß dem Oberbegriff des Anspruchs 1. Siehe DE 203 18 124 U1.

Hubladebühnen dienen zur Unterstützung des Be- und Entladevorgangs von Fahrzeugen, insbesondere Lastkraftwagen und Anhängern. Hierzu werden die Hubladebühnen vorzugsweise im Heckbereich des Fahrzeugs mit sogenannten Tragrohren am Fahrzeugchassis befestigt.

Hubladebühnen verfügen über ein Hubwerk und eine von diesem heb- und senkbare sowie verschwenkbare Ladeplattform. Das Tragrohr ist Bestandteil des Hubwerks. Mindestens eine offene Stirnseite des Tragrohrs ist durch eine Dichtkappe verschlossen. Bevorzugt ist jede der beiden offenen Stirnseiten des Tragrohrs mit einer Dichtkappe verschlossen. Hinter wenigstens einer Dichtkappe ist eine Steuerung der Hubladebühne vorgesehen. Es handelt sich hierbei um die Schaltung der Steuerung auf wenigstens einer Platine.

Problematisch ist bei der bisherigen Zuordnung der Steuerung ein ausreichender Schutz, insbesondere der Platine, gegen Umwelteinflüsse, wie vor allem Feuchtigkeit, die Zugänglichkeit und Servicefreundlichkeit sowie der Anschluss der Steuerung an elektrische Leitungen und Kabel.

Der Erfindung liegt die Aufgabe zugrunde, eine Hubladebühne zu schaffen, die einen verbesserten Schutz der Steuerung, insbesondere der Platine derselben, gewährleistet und montage- sowie servicefreundlich gestaltet ist.

Eine Hubladebühne zur Lösung dieser Aufgabe weist die Merkmale des Anspruchs 1 auf. Demnach weist die Dichtkappe ein Gehäuse zur Aufnahme der der Dichtkappe zugeordneten Steuerung auf, wobei das Gehäuse mit einem Deckel versehen ist. Durch das Gehäuse ist die Steuerung zusätzlich geschützt. Die Steuerung befindet sich nicht nur bei auf die Stirnseite des Tragrohrs aufgesetzter Dichtkappe im Endbereich des Tragrohrs, sondern ist zusätzlich noch vom Gehäuse umgeben. Dadurch, dass das Gehäuse mit einem Deckel versehen ist, wird eine gute Zugänglichkeit der Steuerung im Gehäuse gewährleistet, so dass durch die Erfindung eine einfache Montage und Servicefreundlichkeit gewährleistet ist. Vor allem ist die Steuerung zur Herstellung von Anschlüsse für Leitungen und Kabel, aber auch zum Zwecke des Austausches, leicht zugänglich.

Bevorzugt ist es vorgesehen, im Gehäuse auch wenigstens einige, vorzugsweise alle, Steckverbindungen zum Anschluss der Steuerung an Leitungen und Kabel vorzusehen. Dadurch liegen auch alle Steckverbindungen oder zumindest sensible Steckverbindungen zusammen mit der Steuerung geschützt im der Dichtkappe zugeordneten Gehäuse. Dabei ist bevorzugt das Gehäuse mit der Dichtkappe verbunden.

Bei einer besonders vorteilhaften Ausgestaltung der Erfindung sind die Steuerung und/ oder die Steckverbindungen im Deckel des Gehäuses angeordnet. Durch einfaches Aufklappen des Deckels sind auf diese Weise die Steuerung und bevorzugt auch die Steckverbindungen leicht zugänglich. Vor allem wenn der Deckel vom übrigen Teil des Gehäuses zusätzlich oder alternativ lösbar ausgebildet ist, kann nach dem Lösen der Steckverbindungen die Steuerung zusammen mit dem Deckel von der Hubladebühne ganz entfernt werden. Das ermöglicht eine dezentrale Diagnose und/oder Reparatur der Steuerung. Denkbar ist es auch, im Falle einer defekten Steuerung diese zusammen mit dem Deckel als Einheit auszutauschen. Das vereinfacht die Reparatur der Hubladebühne im Falle eines Defekts der Steuerung.

Bevorzugt ist es vorgesehen, dass das Gehäuse den Deckel und ein fest mit der Dichtkappe verbundenes, rahmenartiges Unterteil aufweist. Durch Abnehmen oder Wegschwenken der Dichtkappe von der durch die Dichtkappe zu verschließenden Stirnseite des Tragrohrs wird das Gehäuse freigelegt und durch Aufklappen oder Entfernen des Deckels des Gehäuses die Steuerung und/oder die Steckverbindungen freigelegt. Dadurch wird die erfindungsgemäße Hubladebühne montage- und servicefreundlich.

Eine vorteilhafte Weiterbildung des Gehäuses sieht es vor, das rahmenartige Unterteil an der tiefsten Stelle oder nahe derselben mit mindestens einer Öffnung oder Ausnehmung zu versehen. Dadurch kann eventuell in das Gehäuse gelangende Flüssigkeit, zum Beispiel Kondenswasser, unten im Gehäuse durch die mindestens eine Öffnung abgeleitet werden und so praktisch eine Drainage des Gehäuseinneren erfolgen.

Bevorzugt ist das rahmenartige Unterteil des Gehäuses fest mit einer Deckwandung oder Stirnfläche der Dichtkappe verbunden. Dabei befindet sich das rahmenartige Unterteil auf der zum Tragrohr weisenden Seite der Deckwandung der Dichtkappe. Dann befindet sich das Gehäuse geschützt im Tragrohr, wenn die Dichtkappe mit dem Gehäuse auf die betreffende Stirnseite des Tragrohrs aufgesetzt ist und diese verschließt.

Weiter bevorzugt ist es vorgesehen, die Wandungen des vorzugsweise rechteckigen Unterteils allseitig von einem die Deckwandung umgebenden Rand der Dichtkappe zu beabstanden. Dadurch wird das Gehäuse kleiner als die Dichtkappe, wodurch es sich im Inneren des Tragrohrs zwängungsfrei unterbringen lässt.

Eine vorteilhafte Ausgestaltung der Hubladebühne sieht es vor, dass der Deckel des Gehäuses schwenkbar und/oder abnehmbar einem freien oberen Rand des rahmenartigen Unterteils zugeordnet ist. Dadurch wird eine leichte Zugänglichkeit zum Inneren des Gehäuses geschaffen, wodurch auch im Gehäuse angeordnete Komponenten der Steuerung oder Schaltung der Hubladebühne, beispielsweise Kabel, Leitungen und Steckverbindungen vor allem zu Montage- und Servicezwecken leicht zugänglich sind. Der schwenkbare oder abnehmbare Deckel des Gehäuses kann auch mit wenigen Handgriffen ausgetauscht werden, wenn das aus irgendeinem Grunde erforderlich sein sollte.

Gemäß einer vorteilhaften Weiterbildung der Hubladebühne ist mindestens eine Schaltung, vorzugsweise wenigstens eine Platine, der Steuerung der Hubladebühne im Deckel eingegossen. Die Schaltung bzw. Platine liegt dadurch in jeder Hinsicht, vor allem gegen Feuchtigkeit, geschützt im Inneren des leicht auswechselbaren Deckels des Gehäuses. Alternativ oder zusätzlich ist es vorgesehen, die der Schaltung bzw. der Platine zugeordneten Steckverbindungen im Gehäuse, vorzugsweise im Deckel desselben, anzuordnen. Das geschieht insbesondere derart, dass nach dem Öffnen des Gehäuses durch Entfernen oder Aufklappen des Deckels die Schaltung und vor allem die Steckverbindungen frei zugänglich sind.

Eine vorteilhafte Weiterbildung der Erfindung sieht es vor, die Steckverbindungen in einem oberhalb der mindestens einen Öffnung im Unterteil des Gehäuses liegenden Bereich des Deckels vorzusehen. Es kann dadurch keine sich im Gehäuse sammelnde Feuchtigkeit oder Flüssigkeit an die Steckverbindungen gelangen, weil die Flüssigkeit vorher durch die mindestens eine Öffnung im Gehäuse abfließt.

Schließlich ist bevorzugt vorgesehen, den Steckverbindungen im Deckel eine plattenartige Schablone bzw. eine Maske zuzuordnen. Die Maske kann mit Durchbrüchen für mindestens einige, vorzugsweise alle, Steckverbindungen versehen sein. Die Stecker können dann durch die Durchbrüche in die Steckeraufnahmen, insbesondere Steckbuchsen, der Schaltung oder Platine eingesteckt werden. Bevorzugt ist es vorgesehen, die Durchbrüche mit Umrissen zu versehen, die mit den jeweiligen Steckern korrespondieren. Auf diese Weise geben die Schablone bzw. die Maske die Platzierungen der Stecker vor, wodurch Vertauschungen der Stecker beim Herstellen der Steckverbindungen ausgeschlossen werden. Denkbar ist es auch, die Stecker oder die Durchbrüche so auszubilden oder mit zusätzlichen Mitteln zu versehen, dass an der Schablone oder der Maske Verriegelungen der Stecker bei hergestellten Steckverbindungen zustande kommen und diese Verriegelungen dauerhaft selbsttätig aufrechterhalten werden und nur durch manuelle Eingriffe, gegebenenfalls mit einem Werkzeug, lösbar sind.

Ein bevorzugtes Ausführungsbeispiel der Erfindung wird nachfolgend anhand der Zeichnung näher erläutert. In dieser zeigen:
- Fig. 1: eine schematische Seitenansicht eines rückwärtigen Teils eines Fahrzeugs mit einer daran angeordneten Hubladebühne in ihrer Schließstellung,
- Fig. 2: eine perspektivische Ansicht einer von einer Dichtkappe verschlossenen Stirnseite eines Tragrohrs der Hubladebühne,
- Fig. 3: eine Ansicht analog zur Fig. 3 bei aufgeklappter Dichtkappe,
- Fig. 4: eine perspektivische Ansicht nur der Dichtkappe mit einem Gehäuse bei aufgeklapptem Deckel,
- Fig. 5: eine perspektivische Ansicht der Dichtkappe ohne den Deckel des Gehäuses,
- Fig. 6: eine Draufsicht auf eine zur offenen Stirnseite des Tragrohrs weisenden Innenseite der Dichtkappe bei geöffnetem Deckel des Gehäuses, und
- Fig. 7: eine Draufsicht auf die Innenseite der Dichtkappe ohne den Deckel des Gehäuses.

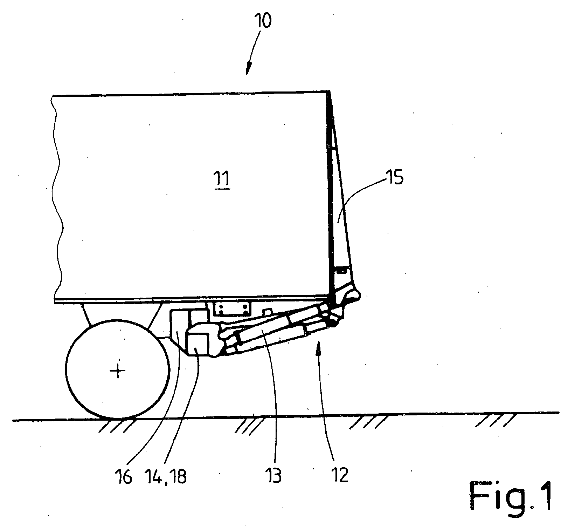

Die Fig. 1 zeigt den rückwärtigen Teil eines Fahrzeugs, und zwar im vorliegenden Fall eines Lastkraftwagens 10. Der Lastkraftwagen 10 verfügt über einen Aufbau 11, bei dem es sich im gezeigten Ausführungsbeispiel um einen sogenannten Kofferaufbau handelt. Der Kofferaufbau verfügt über eine offene oder durch Türen verschließbare Rückseite.

Der Rückseite des Lastkraftwagens 10 ist eine Hubladebühne 12 zugeordnet. Die in üblicher Weise ausgebildete Hubladebühne 12 verfügt über ein Hubwerk 13 mit einem sich quer zur Fahrtrichtung des Lastkraftwagens 10 erstreckenden Tragrohr 14 und eine Ladeplattform 15. Mit dem Tragrohr 14 ist die Hubladebühne 12 am Fahrwerksrahmen 16 des Lastkraftwagens 10 befestigt. Das Hubwerk 13 bewegt die Ladeplattform 15, die in der in der Fig. 1 gezeigten Schließstellung die offene Rückseite des Aufbaus 11 des Lastkraftwagens 10 vollständig verschließt. Die Ladeplattform 15 kann aber auch so ausgebildet sein, dass sie nur einen Teil der Rückseite des Aufbaus 11 verschließt. Vom Hubwerk 13 ist die Ladeplattform 15 in gegensinnigen Richtungen verschwenkbar sowie anhebbar und absenkbar.

Das als Traverse für die Hubladebühne 12 dienende hohle Tragrohr 14 mit einem im Inneren vorzugsweise durchgehenden Hohlraum verfügt an ihren gegenüberliegenden freien Enden über offene Stirnseiten 17. Die offenen Stirnseiten 17 des Tragrohrs 14 sind durch jeweils eine Dichtkappe 18 verschlossen. Die Dichtkappen 18 korrespondieren mit dem äußeren Querschnitt des Tragrohrs 14. Im gezeigten Ausführungsbeispiel verfügt das Tragrohr 14 über einen quadratischen Querschnitt mit abgerundeten Ecken. Die Dichtkappe 18 verfügt über eine etwa quadratische Abdeckfläche 22, die die offene Stirnseite 17 des Tragrohrs 14 vollständig überdeckt und einen den Rand der Abdeckfläche 22 vollständig umgebenden Kragen 23, dessen Innenquerschnitt mit dem Außenquerschnitt des Tragrohrs 14 korrespondiert, so dass der Kragen 23 einen von der Stirnseite 17 ausgehenden schmalen Endbereich des Tragrohrs 14 überlappt und dadurch die Dichtkappe 18 auf dem jeweiligen Ende des Tragrohrs 14 gehalten wird.

Jede Dichtkappe 18 verfügt über zwei Teile, und zwar ein Halteteil 19 und ein Deckelteil 20. Das Deckelteil 20 erstreckt sich über einen Großteil des äußeren Querschnitts des Tragrohrs 14. Das Deckelteil 20 ist schwenkbar am Halteteil 19 angelenkt, und zwar mit einer vertikalen Schwenkachse 21. Verbunden sind an der Schwenkachse 21 das Halteteil 19 und das Deckelteil 20 durch eine dünne, filmartige Restverbindung, insbesondere ein Filmscharnier.

Durch die im gezeigten Ausführungsbeispiel geteilte Bildung der Dichtkappe 18 aus dem schmalen Halteteil 19 und dem größeren Deckelteil 20 sind auch die Abdeckfläche 22 und der Kragen 23 geteilt, werden also sowohl vom Hakenteil 19 als auch vom Deckelteil 20 gebildet. Die jeweilige Dichtkappe 18 ist mit dem schmalen Halteteil 19 am Tragrohr 14 befestigt, vorzugsweise angeschraubt. Um dieses - wenn auch lösbare, so doch temporär feste - Halteteil 19 kann das Deckelteil 20 um die vertikale Schwenkachse 21 auf- und zugeschwenkt werden. Bei aufgeschwenktem Deckelteil 20 der Dichtkappe 18 wird die Stirnseite 17 des Tragrohrs 14 nahezu vollständig freigegeben, weil die Abdeckfläche 22 der Dichtkappe 18 größtenteils von einer ebenen Grundfläche 24 des Deckelteils 20 gebildet wird.

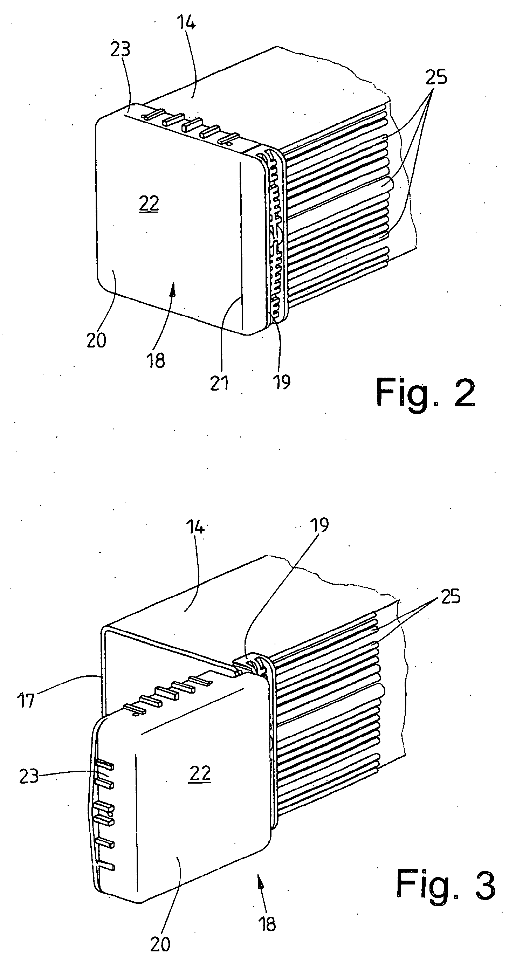

Aus den Fig. 2 und 3 ist ersichtlich, dass durch entsprechende Ausnehmungen im Halteteil 19 hindurch eine Mehrzahl von elektrischen Leitungen 25, Kabeln oder dergleichen hindurchgeführt ist ins Innere des Tragrohrs 14. Die Leitungen 25 erstrecken sich von der Außenseite einer Wandung des Tragrohrs 14 zwischen dem Halteteil 19 und dem Tragrohr 14 vorzugsweise abgedichtet hindurch in Richtung zur offenen Stirnseite 17 des Tragrohrs 14. Die mit nicht gezeigten Steckern versehenen Enden der Leitungen 25 können dadurch mit Steckverbindungen an eine Steuerung im Inneren des Tragrohrs 14 angeschlossen werden.

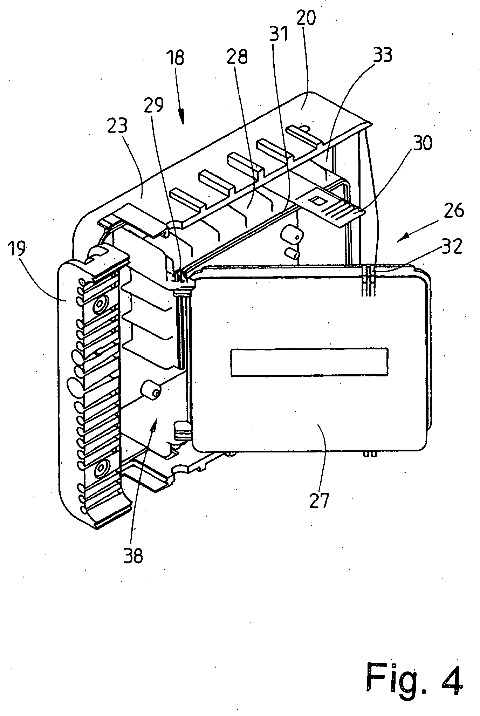

In erfindungsgemäß besonderer Weise ist mindestens eine der beiden Dichtkappen 18 ausgebildet, nämlich diejenige Dichtkappe 18, die gemäß der Darstellung in den Fig. 2 und 3 zum Einführen der Leitungen 25 über die offene Stirnseite 17 in das Tragrohr 14 dient. Dieser in den Fig. 4 bis 7 näher gezeigten Dichtkappe 18 ist ein Gehäuse 26, vorzugsweise ein wesentlich geschlossenes oder verschließbares Gehäuse 26, zugeordnet. Das Gehäuse 26 dient zur Aufnahme der Steuerung der Hubladebühne 12. Hierbei kann es sich um die gesamte Steuerung oder einen Teil der Steuerung handeln. Das Gehäuse 26 ist aus einem rahmenartigen Unterteil 28 und einem Deckel 27 gebildet. Das kragen- bzw. rahmenartige Unterteil 28 ist im gezeigten Ausführungsbeispiel einstückig mit der Grundfläche 24 des Deckelteils 20 der Dichtkappe 18 verbunden, und zwar mit der zur Stirnseite 17 des Tragrohrs 14 weisenden Innenseite der Grundfläche 24 des Deckelteils 20. Dadurch ist das Gehäuse 26 fest mit der Innenseite der Dichtkappe 18 verbunden. Der Deckel 27 ist im gezeigten Ausführungsbeispiel um eine parallel zur Schwenkachse 21 zwischen dem Halteteil 19 und dem Deckelteil 20 der Dichtkappe 18 verlaufende Schwenkachse 29 auf- und zuklappbar. Somit verläuft auch diese Schwenkachse 29 vertikal. Es ist aber auch denkbar, dass die Schwenkachse 29 einen anderen Verlauf aufweist als die Schwenkachse 21, beispielsweise horizontal verläuft. An der Schwenkachse 29 ist der Deckel 27 mit dem Unterteil 28 des Gehäuses 26 lösbar verbunden, beispielsweise durch Rastverbindungen. Dadurch kann der Deckel 27 zum Austausch vom kragenartigen oder rahmenartigen Unterteil 28 gelöst werden. Auf dem der Schwenkachse 29 gegenüberliegen Bereich ist das Unterteil 28 mit dem Deckel 27 durch zwei weitere Verbindungsmittel lösbar verbunden. Bei diesen Verbindungsmitteln handelt es sich um elastische Federzungen 30, die gegenüber einem oberen, freien Rand 31 des Unterteils 28 des Gehäuses vorstehen in Richtung zum Deckel 27. Der Deckel 27 verfügt über zu den Federzungen korrespondierende Vorsprünge 32. Dadurch bilden die Rastmittel Verschlüsse, die den Deckel 27 in seiner Schließstellung halten, und zwar so, dass der Deckel bzw. sein Rand mit Vorspannung auf dem Rand 31 des Unterteils 28 des Gehäuses 26 anliegt und dadurch der Deckel das Gehäuse 26 am Rand 31 des Gehäuses 26 insbesondere flüssigkeitsdicht abschließt. Zur Verbesserung der Dichtwirkung kann es vorgesehen sein, dem Rand 31 des Unterteils 28 und/oder dem auf dem Rand 31 anliegenden äußeren Umfangsbereich des Deckels 27 mindestens eine in den Figuren nicht gezeigte Dichtung zuzuordnen.

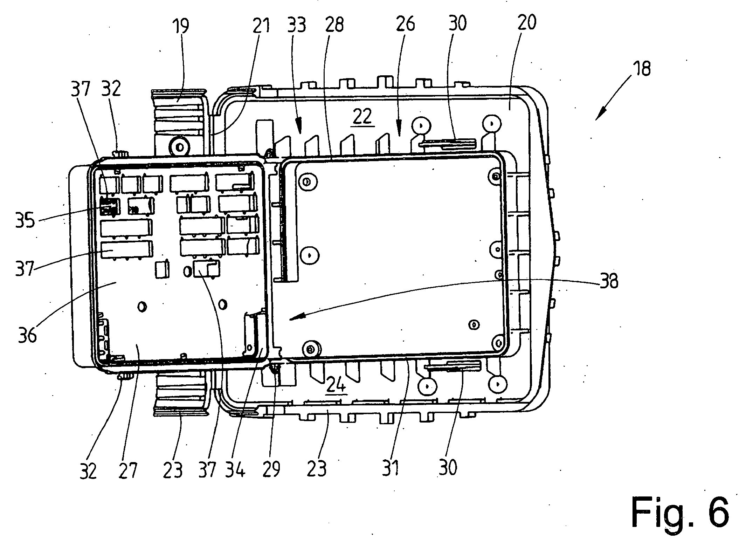

Die Grundfläche des Gehäuses 26 ist so bemessen, dass dieses kleiner ist als die Grundfläche 24 des Deckelteils 20 der Dichtkappe 18. Auf diese Weise entsteht zwischen dem Kragen 23 der Dichtkappe 18 und dem rahmen- bzw. kragenartig ausgebildeten Unterteil 28 des Gehäuses 26 ein umlaufender Spaltraum 33 (Fig. 6). Die Höhe des Gehäuses 26 entspricht etwa der Höhe des Kragens 23 der Dichtkappe 18. Durch diese kleinere Ausbildung des Gehäuses 26 an der Innenseite der Grundfläche 24 der Dichtkappe 18 kann durch Verschwenken des Deckelteils 20 der Dichtkappe 18 um die Schwenkachse 21 das Gehäuse 26 durch die offene Stirnseite 17 in das Innere des Tragrohrs 14 gelangen und genauso durch Aufschwenken des Deckelteils 20 der Dichtkappe 18 durch die offene Stirnseite 17 aus dem Tragrohr 14 herausgeschwenkt werden. Wenn danach der Deckel 27 des Gehäuses 26 geöffnet wird durch Verschwenken um die Schwenkachse 29, ist das Gehäuse 26 offen und dadurch das Innere des Gehäuses 26 frei zugänglich.

Im Deckel 27 des Gehäuses 26 ist auf der zur Stirnseite 17 des Tragrohrs 14 weisenden Innenseite die Steuerung der Hubladebühne 12 untergebracht. Bei der Steuerung handelt es sich bevorzugt um die Schaltung der Steuerung, beispielsweise in Gestalt einer gedruckten Schaltung mit mindestens einer Platine. Die mindestens eine Platine ist wasserdicht im Deckel 27 eingebettet, und zwar mit einer Vergussmasse 34. Die Steuerung, insbesondere Platine, ist dadurch hermetisch geschützt vor jeglichen Umwelteinflüssen im Deckel 27 des Gehäuses 26 untergebracht.

Bei der hier gezeigten Hubladebühne 12 sind in einem oberen Teil des Deckels 27 Steckbuchsen 35 fest angeordnet. Die Sockel der Steckbuchsen 35 sind vorzugsweise wie die mindestens eine Platine in der Vergussmasse 34 eingebettet, und zwar so, dass ihre zur Verbindung mit Steckern an den Enden der Leitungen 25 dienenden Kontakte von der zum Tragrohr 14 weisenden Innenseite des Deckels 27 frei zugänglich sind.

Den Steckbuchsen 35 im Deckel 27 ist eine Maske 36 zugeordnet. Die Maske 36 ist vorzugsweise mit Abstand über der Ebene der die mindestens eine Platine einbettenden Vergussmasse 34 im Deckel 27 befestigt. Die Maske 36 verfügt über einen jeder Steckbuchse 35 zugeordneten Durchbruch 37. Die Umrisse jedes Durchbruchs 37 korrespondieren mit den Umrissen der Steckbuchsen 35, insbesondere der diesen zuzuordnenden Steckern an den Leitungen 25. Auf diese Weise kann durch den jeweiligen Durchbruch 37 nur ein solcher Stecker hindurchgesteckt werden, der zur dazugehörenden Steckbuchse 35 passt. Die Maske 36 verhindert so ein falsches Anschließen der Leitungen 25 sowie Verpolungen. Bevorzugt sind die Maske 36 und die Durchbrüche 37 so ausgebildet, dass sie mit Rastmitteln an den Steckern korrespondieren und dadurch die Steckverbindungen sichern.

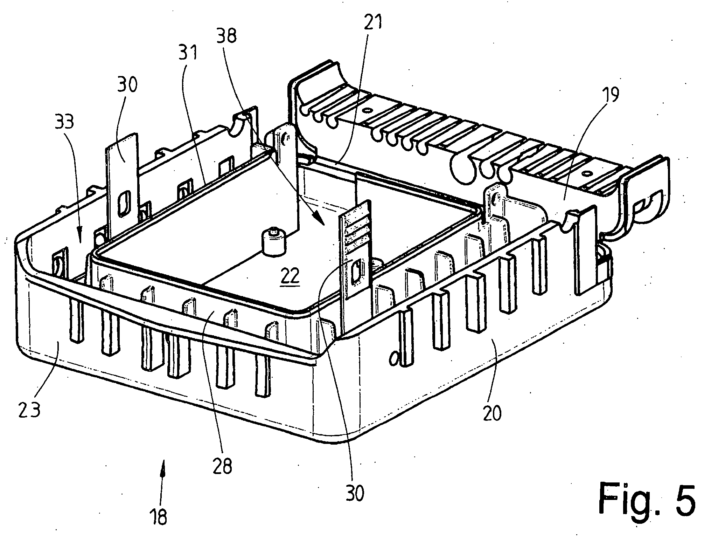

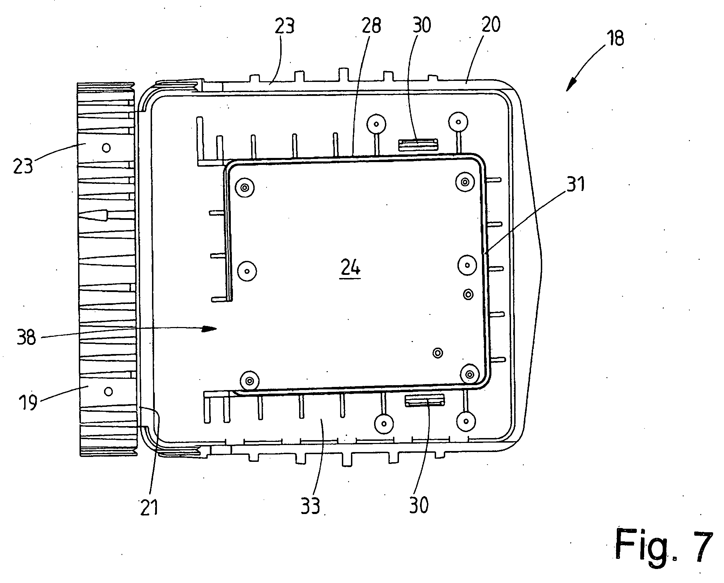

Besonders die Fig. 6, aber auch die Fig. 5 und 7, lassen erkennen, dass das mit der Grundfläche 24 der Dichtkappe 18 verbundene Unterteil 28 des Gehäuses 26 nicht vollständig rahmenartig umläuft. Vielmehr verfügt das Unterteil 28 über eine Öffnung 38, die gebildet ist durch ein nur teilweise umlaufendes Unterteil 28. Dadurch erstreckt sich die Öffnung 38 vom oberen Rand 31 des Unterteils 28 durchgehend bis zur Abdeckfläche 22 des Deckelteils 20 der Dichtkappe 18 (Fig. 5). Die Öffnung 38 befindet sich in einem unteren Teil, vorzugsweise einem unteren Drittel, der Gesamtfläche des Gehäuses 26. Dadurch kann eventuell ins Gehäuse 26 gelangende Flüssigkeit oder sich im Gehäuse 26 bildende Kondensflüssigkeit durch die Öffnung 38 im Bodenbereich des Gehäuses 26 abfließen. Die Fig. 6 zeigt, dass sich die Steckbuchsen 35 und die Durchbrüche 37 in der Maske 36 des Deckels 27 in einem über der Öffnung 38 im Unterteil 28 sich befindenden Flächenbereich des Gehäuses 26 befinden. Dadurch kann eventuell durch die Öffnungen 38 in das Gehäuse 26 gelangende Flüssigkeit die Steckverbindungen nicht erreichen. Sich im Gehäuse 26 sammelnde Flüssigkeit kann durch die unter den Steckverbindungen liegende Öffnung 38 abfließen, ohne dass solche Flüssigkeit an die Steckverbindungen gelangen kann.

Die gesamte Dichtkappe 19 mit dem Unterteil 28 des Gehäuses 26 ist einstückig aus Kunststoff, insbesondere thermoplastischem Kunststoff oder einem Elastomer, hergestellt, und zwar vorzugsweise als Spritzgussteil. Der Deckel 27 des Gehäuses 26 stellt ein separates Teil der Dichtkappe 18 dar. Auch der Deckel 27 ist vorzugsweise aus Kunststoff, insbesondere thermoplastischem Kunststoff oder Elastomer, im Spritzgussverfahren hergestellt. Nach der Herstellung des Deckels 27 wird in denselben die Platine mit den Steckbuchsen 35 mittels der Vergussmasse 34 eingegossen.

Durch Aufklappen des Deckelteils 20 der Dichtkappe 18 und des Deckels 27 des Gehäuses 26 sind die Steckbuchsen 35 im Deckel 27 frei zugänglich. Durch Trennung der Rastverbindungen zwischen dem Deckel 27 und dem Unterteil 28 kann nach dem Lösen der Steckverbindungen der Deckel 27 von der Dichtkappe 18 getrennt werden, beispielsweise zu Servicearbeiten. Falls die Steuerung bzw. ihre Platine irreparable Schäden aufweisen sollte, kann durch einfaches Austauschen des Deckels 27 mit der mindestens einen darin eingegossenen Steuerungsplatine und den Steckbuchsen 35 die Hubladebühne 12 einfach mit einer neuen Steuerung versehen werden. Durch die Unterbringung der Steuerung und der Steckbuchsen 35 im der Dichtkappe 18 zugeordneten, insbesondere mit der Dichtkappe 18 verbundenen, zusätzlichen Gehäuse 26 sind die Steuerung und die Steckverbindungen doppelt geschützt im Inneren des Tragrohrs 14 unterbringbar. Außerdem ist die Steuerung durch das Eingießen im Deckel 27 gegen Feuchtigkeit geschützt und es kann sich im Inneren des Gehäuses 26 beispielsweise bildendes Kondenswasser durch die untenliegende Öffnung 38 abfließen, ohne die Steckverbindungen im Bereich der Steckbuchsen 35 zu beeinträchtigen. Schließlich werden durch die schablonenartige Maske 36 Verpolungen oder fehlerhafte Anschlüsse der Steuerung an die Leitungen 25 der Hubladebühne 12 zuverlässig vermieden.

**Bezugszeichenliste:**

| | | | |
|---|---|---|---|
| 10 | Lastkraftwagen | 36 | Maske |
| 11 | Aufbau | 37 | Durchbruch |
| 12 | Hubladebühne | 38 | Öffnung |
| 13 | Hubwerk | | |
| 14 | Tragrohr | | |
| 15 | Ladeplattform | | |
| 16 | Fahrwerksrahmen | | |
| 17 | Stirnseite | | |
| 18 | Dichtkappe | | |
| 19 | Halteteil | | |
| 20 | Deckelteil | | |
| 21 | Schwenkachse | | |
| 22 | Abdeckfläche | | |
| 23 | Kragen | | |
| 24 | Grundfläche | | |
| 25 | Leitung | | |
| 26 | Gehäuse | | |
| 27 | Deckel | | |
| 28 | Unterteil | | |
| 29 | Schwenkachse | | |
| 30 | Federzunge | | |
| 31 | Rand | | |
| 32 | Vorsprung | | |
| 33 | Spaltraum | | |
| 34 | Vergussmasse | | |
| 35 | Steckbuchse | | |

## Patentansprüche

1. Hubladebühne zur Anordnung an einem Fahrzeug, mit einem Hubwerk (13) und einer Ladeplattform (15) und mit einem dem Hubwerk (13) zugeordneten Tragrohr (14) zur Befestigung des Hubwerks (13) am Fahrzeug, wobei mindestens eine Stirnseite (17) des Tragrohrs (14) durch eine Dichtkappe (18) verschließbar ist, **dadurch gekennzeichnet, dass** der Dichtkappe (18) ein einen Deckel (27) aufweisendes Gehäuse (26) zur Aufnahme einer Steuerung zugeordnet ist.

2. Hubladebühne nach Anspruch 1, **dadurch gekennzeichnet, dass** im Gehäuse (26) Steckbuchsen (35) zur Verbindung der Steuerung mit Leitungen (25) vorgesehen sind.

3. Hubladebühne nach Anspruch 1 oder 2, **dadurch gekennzeichnet, dass** die Steuerung und/oder die Steckbuchsen (35) im Deckel (27) des Gehäuses (26) der Dichtkappe (18) angeordnet sind.

4. Hubladebühne nach einem der vorhergehenden Ansprüche, **dadurch gekennzeichnet, dass** das Gehäuse (26) den Deckel (27) und ein fest mit der Dichtkappe (18) verbundenes, rahmenartiges Unterteil (28) aufweist.

5. Hubladebühne nach Anspruch 4, **dadurch gekennzeichnet, dass** das rahmenartige Unterteil (28) des Gehäuses (26) mindestens eine von der tiefsten Stelle eines vom Unterteil (28) mindestens teilweise umgebenden Innenraums ausgehende Öffnung (38) oder Ausnehmung aufweist.

6. Hubladebühne nach Anspruch 4 oder 5, **dadurch gekennzeichnet, dass** das rahmenartige Unterteil (28) des Gehäuses (26) fest mit einer Grundfläche (24) der Dichtkappe (18) verbunden und vorzugsweise allseitig von einem die Grundfläche (24) umgebenden Kragen (23) der Dichtkappe (18) beabstandet ist.

7. Hubladebühne nach einem der vorhergehenden Ansprüche, **dadurch gekennzeichnet, dass** der Deckel (27) schwenkbar und/oder abnehmbar einem freien Rand (31) des rahmenartigen Unterteils (28) zugeordnet ist, wobei vorzugsweise mindestens eine Dichtung zwischen dem Deckel (27) und dem freien Rand (31) des Unterteils (28) vorgesehen ist.

8. Hubladebühne nach einem der vorhergehenden Ansprüche, **dadurch gekennzeichnet, dass** mindestens eine Schaltung, vorzugsweise eine wenigstens eine Platine, der Steuerung im Deckel (27) eingegossen ist, wobei vorzugsweise zusätzlich zur Schaltung bzw. der Platine Steckverbindungen, zum Beispiel Steckbuchsen (35), derart im Gehäuse (26), vorzugsweise im Deckel (27), angeordnet sind, dass nach dem Öffnen des Deckels (27) die Steckverbindungen bzw. Steckbuchsen (35) frei zugänglich sind.

9. Hubladebühne nach einem der vorhergehenden Ansprüche, **dadurch gekennzeichnet, dass** die Steckverbindungen bzw. Steckbuchsen (35) einem über der mindestens einen Öffnung (38) im Unterteil (28) des Gehäuses (26) liegenden oberen Bereich des Deckels (27) zugeordnet sind.

10. Hubladebühne nach einem der vorhergehenden Ansprüche, **dadurch gekennzeichnet, dass** die Steckverbindungen bzw. Steckbuchsen (35) dem Deckel (27) einer plattenartigen Schablone bzw. einer Maske (36) zugeordnet sind, wobei vorzugsweise die Schablone bzw. Maske (36) Durchbrüche (37) für Stecker mindestens einiger Leitungen (25) aufweist und/oder die Durchbrüche (37) mit dem der jeweiligen Steckbuchse (35) zuzuordnenden Stecker korrespondierende Umrisse aufweisen und/oder mit Verriegelungen der in den betreffenden Steckbuchsen (35) platzierten Stecker versehen sind.

## Claims

1. Cantilever lift for arrangement on a vehicle, with a lifting mechanism (13) and a loading platform (15) and with a supporting tube (14), which is assigned to the lifting mechanism (13), for securing the lifting mechanism (13) on the vehicle, wherein at least one end side (17) of the supporting tube (14) is closeable by a sealing cap (18), **characterized in that** the sealing cap (18) is assigned a housing (26) for accommodating a controller, the housing having a cover (27).

2. Cantilever lift according to Claim 1, **characterized in that** sockets (35) for connecting the controller to lines (25) are provided in the housing (26).

3. Cantilever lift according to Claim 1 or 2, **characterized in that** the controller and/or the sockets (35) are arranged in the cover (27) of the housing (26) of the sealing cap (18).

4. Cantilever lift according to one of the preceding claims, **characterized in that** the housing (26) has the cover (27) and a frame-like lower part (28) connected fixedly to the sealing cap (18).

5. Cantilever lift according to Claim 4, **characterized in that** the frame-like lower part (28) of the housing (26) has at least one opening (38) or recess emerging from the lowest point of an interior space which is at least partially surrounded by the lower part (28).

6. Cantilever lift according to Claim 4 or 5, **characterized in that** the frame-like lower part (28) of the housing (26) is fixedly connected to a base (24) of the sealing cap (18) and is spaced apart preferably on all sides from a collar (23) of the sealing cap (18), the collar surrounding the base (24).

7. Cantilever lift according to one of the preceding claims, **characterized in that** the cover (27) is assigned pivotably and/or removably to a free edge (31) of the frame-like lower part (28), wherein preferably at least one seal is provided between the cover (27) and the free edge (31) of the lower part (28).

8. Cantilever lift according to one of the preceding claims, **characterized in that** at least one circuit, preferably an at least one printed circuit board, of the controller is integrally cast in the cover (27), wherein preferably, in addition to the circuit or the printed circuit board, plug-in connections, for example sockets (35), are arranged in the housing (26), preferably in the cover (27), in such a manner that the plug-in connections or sockets (35) are freely accessible after the cover (27) is opened.

9. Cantilever lift according to one of the preceding claims, **characterized in that** the plug-in connections or sockets (35) are assigned to an upper region of the cover (27), said region lying over the at least one opening (38) in the lower part (28) of the housing (26).

10. Cantilever lift according to one of the preceding claims, **characterized in that** the plug-in connections or sockets (35) are assigned to the cover (27) of a plate-like template or mask (36), wherein preferably the template or mask (36) has apertures (37) for plugs of at least some lines (25) and/or the apertures (37) have contours corresponding to the plug to be assigned to the respective socket (35) and/or are provided with locks for the plugs placed in the relevant sockets (35).

## Revendications

1. Plate-forme de chargement par levage destinée au montage sur un véhicule, comprenant un châssis de levage (13) et une plate-forme de chargement (15) et un tube porteur (14) associé au châssis de levage (13) pour la fixation du châssis de levage (13) au véhicule, au moins un côté frontal (17) du tube porteur (14) pouvant être fermé par un capuchon d'étanchéité (18), **caractérisée en ce que** le capuchon d'étanchéité (18) est associé à un boîtier (26) présentant un couvercle (27), pour recevoir une commande.

2. Plate-forme de chargement par levage selon la revendication 1, **caractérisée en ce que** des douilles d'enfichage (35) sont prévues dans le boîtier (26) pour la connexion de la commande à des lignes (25).

3. Plate-forme de chargement par levage selon la revendication 1 ou 2, **caractérisée en ce que** la commande et/ou les douilles d'enfichage (35) sont disposées dans le couvercle (27) du boîtier (26) du capuchon d'étanchéité (18).

4. Plate-forme de chargement par levage selon l'une quelconque des revendications précédentes, **caractérisée en ce que** le boîtier (26) présente le couvercle (27) et une partie inférieure (28) de type cadre connectée fixement au capuchon d'étanchéité (18).

5. Plate-forme de chargement par levage selon la revendication 4, **caractérisée en ce que** la partie inférieure de type cadre (28) du boîtier (26) présente au moins une ouverture (38) ou un évidement partant depuis le point le plus bas d'un espace interne entouré au moins en partie par la partie inférieure (28).

6. Plate-forme de chargement par levage selon la revendication 4 ou 5, **caractérisée en ce que** la partie inférieure en forme de cadre (28) du boîtier (26) est connectée fixement à une surface de base (24) du capuchon d'étanchéité (18) et est de préférence espacée de tous les côtés d'un col (23) du capuchon d'étanchéité (18) entourant la surface de base (24).

7. Plate-forme de chargement par levage selon l'une quelconque des revendications précédentes, **caractérisée en ce que** le couvercle (27) est associé de manière pivotante et/ou amovible à un bord libre (31) de la partie inférieure en forme de cadre (28), au moins un joint d'étanchéité étant prévu de préférence entre le couvercle (27) et le bord libre (31) de la partie inférieure (28).

8. Plate-forme de chargement par levage selon l'une quelconque des revendications précédentes, **caractérisée en ce qu'**au moins un circuit, de préférence un au moins une platine, de la commande est encastrée dans le couvercle (27), des connexions par enfichage, par exemple des douilles enfichables (35) étant de préférence disposées en plus du circuit ou de la platine dans le boîtier (26), de préférence dans le couvercle (27), de telle sorte qu'après l'ouverture du couvercle (27), les connexions enfichables ou les douilles enfichables (35) soient librement accessibles.

9. Plate-forme de chargement par levage selon l'une quelconque des revendications précédentes, **caractérisée en ce que** les connexions enfichables ou les douilles enfichables (35) sont associées à une région supérieure du couvercle (27) située au-dessus de l'au moins une ouverture (38) dans la partie inférieure (28) du boîtier (26).

10. Plate-forme de chargement par levage selon l'une quelconque des revendications précédentes, **caractérisée en ce que** les connexions enfichables ou les douilles enfichables (35) sont associées au couvercle (27) d'un patron en forme de plaque ou d'un masque (36), le patron ou le masque (36) présentant de préférence des orifices (37) pour des connecteurs enfichables d'au moins certaines lignes (25) et/ou les orifices (37) présentant des pourtours correspondant au connecteur enfichable associé à la douille enfichable respective (35) et/ou étant pourvus de verrouillages des connecteurs enfichables placés dans les douilles enfichables concernées (35).
